# EUROPEAN PATENT SPECIFICATION

(11) **EP 4 059 973 B1**
(45) Date of publication and mention of the grant of the patent: **07.01.2026**
(21) Application number: 22162264.0
(22) Date of filing: 15.03.2022
(51) Int. Cl.: C08G 59/42, C08G 59/68, C08K 3/36, C08K 3/34, C08L 63/00, H01B 3/40

(54) **EPOXY RESIN COMPOSITIONS AND METHODS FOR PREPARING THEM**
EPOXIDHARZZUSAMMENSETZUNGEN UND VERFAHREN ZU IHRER HERSTELLUNG
COMPOSITIONS DE RÉSINE ÉPOXY ET LEURS PROCÉDÉS DE PRÉPARATION

(30) Priority: 15.03.2021 IN 202111010914
(43) Date of publication of application: 21.09.2022
(73) Proprietor: Aditya Birla Chemicals (Thailand) Ltd. (Advanced Materials), 21150 Map Ta Phut, Rayong (TH)
(72) Inventor: DUBEY, Pradip Kumar, 21150 MAP TA PHUT, RAYONG (TH); DIXIT, Amit, 21150 MAP TA PHUT, RAYONG (TH); CHANGMONGKOL, Sirirat, 21150 MAP TA PHUT, RAYONG (TH); PATTANAPAIBOONKUL, Sudarat, 21150 MAP TA PHUT, RAYONG (TH); SONGPRASOB, Suphitcha, 21150 MAP TA PHUT, RAYONG (TH); CHADSIRIWATTANA, Atchara, 21150 MAP TA PHUT, RAYONG (TH)
(74) Representative: Cabinet Beau de Loménie

(56) References cited:
- CN-A- 110 218 414
- US-A- 3 689 444
- MALCOLM J BILLINGS ET AL: "An Outdoor Tracking and Erosion Test of Some Epoxide Resins", IEEE TRANSACTIONS ON ELECTRICAL INSULATION, IEEE, US, vol. EI-1, no. 3, 1 August 1968 (1968-08-01), pages 62 - 70, XP011162980, ISSN: 0018-9367
- "THERMOSETS", EMULSION TECHNOLOGY. INCLUDING THE SYMPOSIUM ON TECHNICAL ASPECTS OF EMULSIONS, BROOKLYN, CHEMICAL PUBL, US, 1 January 1998 (1998-01-01), pages 250 - 281, XP000923453
- SCHAEDLER T. A. ET AL: "Ultralight Metallic Microlattices", SCIENCE, vol. 334, no. 6058, 17 November 2011 (2011-11-17), US, pages 962 - 965, XP055775404, ISSN: 0036-8075, DOI: 10.1126/science.1211649

## Description

### FIELD OF INVENTION

The present disclosure relates to epoxy resin compositions. Specifically, the present disclosure relates to safe labelled epoxy resin compositions, methods of preparing safe labelled epoxy resin compositions, and applications of such compositions.

### BACKGROUND

Epoxy resins are used in the manufacture of adhesives, plastics, paints, coatings, primers and sealers, flooring and other products and materials that are used in building and construction applications. Before they can be used to manufacture useful products, epoxy resins must be cured or cross-linked by polymerization into hard, infusible solids by the addition of substances that are called curing agents or hardeners. Certain properties of epoxy resins including mechanical strength, chemical resistance, and electrical insulation are realized upon curing. The final properties of the epoxy resin depend to a large extent on the curing agent used and the method of curing.

Various kinds of curing agents are used to cure epoxy resins. Among them the most commonly used curing agents belong to the class of chemicals known as amines. Next to these, other widely used curing agents include polyamides, organic acids and anhydrides.

Amine curing systems are among the most widely used curing agents. However, it is now well-known that the use of these substances poses a health risk. Amines are well known as primary skin irritants and sensitizers which may cause dermatitis, inflammation of the mucous membranes skin allergies, respiratory distress and occasionally other symptoms such as liver dysfunction or visual disturbance and may potentially be carcinogenic.

Anhydride curing systems are widely used and are the preferred system for the manufacture of insulation systems for electrical components. They are also generally preferred as they are less volatile compounds and are also less toxic causing very little irritation to the skin. Anhydride curing agents have several advantageous properties such as high thermal deformation temperature, excellent heat resistance, good mechanical and electrical properties. However, the curing temperature of anhydride curing agents is high and the curing period is long. Further, the alkali resistance and solvent resistance of resin/anhydride curing systems is inferior. Additionally, under the Registration, Evaluation, Authorisation and Restriction of Chemicals (REACH) regulation many anhydride compounds are given a R42 label (as respiratory sensitizers) and some anhydrides are already on the Substances of Very High Concern (SVHC) candidate list. EP2864418B1 discloses a curable epoxy resin composition which comprises a combination of at least one bisphenol A-type epoxy resin, at least one oxazolidone ring containing epoxy resin, and at least one anhydride hardener. The document suggests the use of anhydrides such as hexahydrophthalic anhydride (HHPA) which is listed in the candidate list of SVHC substances.

US20060219757A1 discloses a method of producing a cure system. The method involves mixing a curing agent that is a low temperature liquid and a finely divided refractory solid, wherein the refractory solid is non-reactive with the curing agent. The curing agent includes one or more anhydrides which include SVHC candidates such as HHPA and cyclohexane dicarboxylic anhydride among others.

Billings M J et al; IEEE Transactions on electrical insulation; Vol. EI-3; No. 3; August 1969 discloses an epoxy resin composition comprising bisphenol A epoxy resin, dodecenyl succinic anhydride, an accelerator and silica.

### SUMMARY

The present invention relates to a method for preparing an epoxy resin composition, the method. The method comprises mixing an epoxy resin selected from the group consisting of bisphenol A epoxy resin, bisphenol F epoxy resin, novolac based resin, cycloaliphatic epoxy resin, and a combination thereof in the range of 35-65% w/w, and an anhydride curing agent selected from the group consisting of glutaric anhydride, dodecenyl succinic anhydride, nonenyl succinic anhydride, and a combination thereof, in the range of 35-65 % w/w while continuously stirring at a temperature in the range of 15-100°C for 15-120 minutes; adding to the mixture, one or more accelerator selected from the group consisting of amine, a metal halide, a phosphine, an acetylacetonate, an imidazole compound and a combination thereof, in the range of 0.3-1.5 % by weight of the mixture and one or more filler selected from the group consisting of silica, wollastonite and a combination thereof, in the range of 190-230 % by by weight of the mixture; and curing the mixture obtained after step (b) at 80°C-140°C for 10 minutes to 10 hours to obtain the epoxy resin composition, wherein the weight loss of the composition is less than 1.8% after aging for 1000 hrs at 180°C based on IEC 60216.

The present invention also relates to an epoxy resin composition comprising an epoxy resin selected from the group consisting of bisphenol A epoxy resin, bisphenol F epoxy resin, novolac based resin, cycloaliphatic epoxy resin, and a combination thereof in the range of 35-65% w/w; an anhydride curing agent selected from the group consisting of glutaric anhydride, dodecenyl succinic anhydride, nonenyl succinic anhydride, and a combination thereof, in the range of 35-65% w/w; one or more accelerator selected from the group consisting of amine, a metal halide, a phosphine, an acetylacetonate, an imidazole compound and a combination thereof, in the range of 0.3-1.5% by weight of the epoxy resin and the anhydride curing agent; and one or more filler selected from the group consisting of silica, wollastonite and a combination thereof, in the range of 190-230% weight of the epoxy resin and the anhydride curing agent; wherein weight loss of the composition is less than 1.8% after aging 1000 hrs at 180°C based on IEC 60216.

The present disclosure further relates to the epoxy resin compositions obtained from the said process and products comprising the said compositions.

The present invention further relates to the epoxy resin compositions and products comprising the said compositions.

### BRIEF DESCRIPTION OF DRAWINGS

**FIG. 1:** FIG. 1 shows comparative weight loss after aging at 180°C for conventional indoor system and inventive compositions Exp. 1-3
**FIG. 2:** FIG. 2 shows comparative weight loss after aging at 180°C for inventive compositions Exp. 4-9
**FIG. 3:** FIG. 3 shows comparative weight loss after aging at 180°C for conventional outdoor system and inventive composition Exp. 10
**FIG. 4:** FIG. 4 shows comparative weatherability, ΔE for conventional outdoor system and inventive composition Exp. 10

### DETAILED DESCRIPTION

Reference will now be made in detail to embodiments of the present disclosure. The terminology used in the description presented herein is not intended to be interpreted in any limited or restrictive manner, simply because it is being utilized in conjunction with a detailed description of certain specific embodiments of the invention. Furthermore, embodiments of the invention may include several features, no single one of which is solely responsible for its desirable attributes, or which is essential to practicing the inventions herein described.

It will be understood by those skilled in the art that the foregoing general description and the following detailed description are explanatory of the invention and are not intended to be restrictive thereof.

The terms "a," "an,", and "the" are used to refer to "one or more" (i.e., to at least one) of the grammatical object of the article.

Reference throughout this specification to "an aspect", "another aspect" or similar language means that a particular feature, structure, or characteristic described in connection with the embodiment is included in at least one embodiment of the present invention.

The terms "comprises", "comprising", or any other variations thereof, are intended to cover a non-exclusive inclusion and are not intended to be construed as "consists of only", such that a process or method that comprises a list of steps does not include only those steps but may include other steps not expressly listed or inherent to such process or method.

Likewise, the terms "having" and "including", and their grammatical variants are intended to be non-limiting, such that recitations of said items in a list are not to the exclusion of other items that can be substituted or added to the listed items.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods, and materials are now described.

The present disclosure relates to a method for preparing an epoxy resin composition. The method comprises mixing an epoxy resin selected from the group consisting of bisphenol A epoxy resin, bisphenol F epoxy resin, novolac based resin, cycloaliphatic epoxy resin, and a combination thereof in the range of 35- 65% w/w, and an anhydride curing agent selected from the group consisting of glutaric anhydride, dodecenyl succinic anhydride, nonenyl succinic anhydride, and a combination thereof, in the range of 35-65% w/w while continuously stirring at a temperature in the range of 15-100°C for 15-120 minutes; adding to the mixture, one or more accelerator selected from the group consisting of amine, a metal halide, a phosphine, an acetylacetonate, an imidazole compound and a combination thereof, in the range of 0.5-1.5% by weight of the mixture and one or more filler selected from the group consisting of silica, wollastonite and a combination thereof, in the range of 90-230% by weight of the mixture; curing the mixture obtained after step (b) at 80°C-140°C for 10 minutes to 10 hours to obtain the epoxy resin composition, wherein the weight loss of the composition is less than 1.8% after 1000 hrs at 180°C based on IEC 60216.

The epoxy resin composition obtained from the method has a Critical Strain energy release rate in the range of 900-1500 J/m2.

IEC 60216 is a test method to determine the thermal endurance properties of electrical insulating materials.

Suitable examples of phosphine include but are not limited to compounds such as triphenylphosphine.

Suitable examples of metal halides include but are not limited to boron trifluoride, zinc chloride, and stannic chloride.

Suitable examples of amines include, but are not limited to, dimethylamine, benzyldimethylamine, and dimethylaminoethylphenol, triethylallyl ammonium, triethylbenzyl ammonium, triethyl (4-bromo-benzyl) ammonium, triethyl (4-nitro-benzyl) ammonium, and triethyl (4-crotonic acid ethyl ester) ammonium.

The one more filler imparts useful physiochemical and mechanical properties to the composition such as reduction in shrinkage during curing, and reduction in the coefficient of thermal expansion.

In accordance with an embodiment, the one or more filler(s) is added to the mixture under vacuum pressure in the range of 1-10 mbar.

In accordance with an embodiment, the method further comprises adding one or more additional ingredients to the mixture. Examples of such additional ingredients include but are not limited to a modifier, an additive and a combination thereof.

In accordance with an embodiment, the method comprises adding the one or more of modifier in the range of 5-15% by weight of the mixture of the epoxy resin and the anhydride curing agent before the curing. The one or more modifier(s) is selected on the basis of desired specific functional properties such as flexibility, and toughness. Examples of suitable modifier include but are not limited to plasticizer, flexiblizer, toughener, and a combination thereof.

In accordance with an embodiment, the method comprises adding the one or more of additive in the range of 0.5-3.0% by weight of the mixture of the epoxy resin and the anhydride curing agent before the curing. Examples of suitable additive include but are not limited to defoamer, flow additive, rheological additive, air release additive, wetting and dispersion agent, pigment, coupling agent, and a combination thereof.

In an embodiment, at the time of mixing both the epoxy resin and the anhydride curing agent are in a molten state.

The present disclosure also relates to epoxy resin compositions obtained from the method and the various embodiments of the method described above. The composition so obtained has a Critical Strain energy release rate in the range of 900-1500 J/m2.

The epoxy resin composition in accordance with the present disclosure comprises an epoxy resin selected from the group consisting of bisphenol A epoxy resin, bisphenol F epoxy resin, novolac based resin, cycloaliphatic epoxy resin, and a combination thereof in the range of 35-65% w/w, an anhydride curing agent selected from the group consisting of glutaric anhydride, dodecenyl succinic anhydride, nonenyl succinic anhydride, and a combination thereof, in the range of 35-65% w/w; one or more accelerator selected from the group consisting of amine, a metal halide, a phosphine, an acetylacetonate, an imidazole compound and a combination thereof, in the range of 0.3-1.5% by weight of the epoxy resin and the anhydride curing agent; and one or more filler selected from the group consisting of silica, wollastonite and a combination thereof, in the range of 190-230% by weight of the epoxy resin and the anhydride curing agent.

The weight loss of the composition is less than 1.8% after aging 1000 hrs at 180°C based on IEC 60216.

The composition has a Critical Strain energy release rate in the range of 900-1500 J/m2.

The disclosed composition may further include one or more additional ingredients. Examples the additional ingredients include but are not limited to one or more of a modifier, an additive, and a combination thereof.

In accordance with an embodiment, the composition comprises the one or more modifier in the range of 5-15% by weight of the mixture of the epoxy resin and the anhydride curing agent. The examples of the suitable modifier include but are not limited to a plasticizer, a flexiblizer, a toughener, and a combination thereof.

In accordance with an embodiment, the composition comprises the one or more additive in the range of 0.5-3.0% by weight of the mixture of the epoxy resin and the anhydride curing agent. Examples of the suitable additive include but are not limited to a defoamer, a flow additive, a rheological additive, an air release additive, a wetting and dispersion agent, a pigment, a coupling agent, and a combination thereof.

The present disclosure also relates to a product comprising or made from the disclosed compositions. Examples of such product include but are not limited to electrical insulating component, instrument transformer, power transformer, bushing, insulator, and switchgear.

The product may be made by any suitable method. In an example, the product is made by Vacuum Casting Process ("VCP"). In another example, the product is made by Automatic Pressure Gelation Process ("APGP").

The present disclosure also relates to the applications and the uses of said epoxy resin composition. The said epoxy resin composition may be used for manufacturing both indoor and outdoor electrical components such as electrical and insulating components for power generation, transmission and distribution. It may also be used in other applications such as fiber reinforce composites in infrastructure and energy applications.

### EXAMPLES

### Example 1: Preparation of the Epoxy Resin Inventive Compositions Exp. 1-3

**Exp. 1:** The anhydride curing agent, glutaric anhydride, at 65% by weight of epoxy resin, was heated at 60°C in a closed vessel under a nitrogen atmosphere to obtain the compound in a molten form. The Bisphenol A epoxy resin with equivalent weight, 186 gm/eq was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 1% by weight of epoxy resin, was added to the epoxy resin and curing agent mix and stirred under nitrogen at 50°C for 15 minutes. Finally, the filler, Silica W12EST, was added, at 305% by weight of epoxy resin to the epoxy resin, the curing agent and the accelerator mix and the mixture so obtained was stirred under 5 mbar vacuum for 15 minutes to formulate the epoxy resin composition.

**Exp. 2:** The Cycloaliphatic epoxy resin with equivalent weight, 131 gm/eq was charged in a vessel then the dodecenylsuccinic anhydride, 184% by weight of epoxy resin, was added to the vessel containing the epoxy resin and both components were stirred under nitrogen at room temperature for 15 minutes. 1-Methylimidazole at 1% by weight of epoxy resin, was added to the epoxy resin and curing agent mix and stirred under nitrogen at room temperature for 15 minutes. Finally, the filler, Silica W12EST, was added, at 655 % by weight of epoxy resin to the epoxy resin, the curing agent and the accelerator mix and the mixture so obtained was stirred under 5 mbar vacuum for 15 minutes to formulate the epoxy resin composition.

**Exp. 3:** The Cycloaliphatic epoxy resin with equivalent weight, 131 gm/eq was charged in a vessel then the Nonenyl Succinic Anhydride, 151.9% by weight of epoxy resin, was added to the vessel containing the epoxy resin and both components were stirred under nitrogen at room temperature for 15 minutes. 1-Methylimidazole at 1% by weight of epoxy resin, was added to the epoxy resin and curing agent mix and stirred under nitrogen at at room temperature for 15 minutes. Finally, the filler, Silica W12EST, was added, at 470% by weight of epoxy resin to the epoxy resin, the curing agent and the accelerator mix and the mixture so obtained was stirred under 5 mbar vacuum for 15 minutes to formulate the epoxy resin composition.

**Table 1** provides the details of the compositions of conventional indoor system and the inventive compositions Exp. 1-3.

**Table 1: Epoxy Resin Compositions**

| **Component/ Application** | **Conventional Indoor System** | **Exp 1** | **Exp 2** | **Exp 3** |
|---|---|---|---|---|
| Epoxy Resin | Bisphenol A epoxy resin | Bisphenol A epoxy resin | Cycloaliphatic epoxy resin | Cycloaliphatic epoxy resin |
| Hardener | Modified anhydride | Glutaric anhydride | Dodecenyl succinic anhydride | Nonenyl succinic anhydride |
| Accelerator | Benzyl di-methyl amine | Benzyl di-methyl amine | 1-Methylimidazole | 1-Methylimidazole |
| Filler | Silica | Silica | Silica | Silica |
| Mixing Ratio Resin: Hardener: Accelerator: Filler | 100:100:1:400 | 100:60:1:305 | 100:184:1:655 | 100:151.9:1:470 |
| Modifier (part by wt. of Epoxy resin) | Plasticizer (10) | - | - | - |
| Application | Indoor | Indoor | Indoor | Indoor |

### Example 2: Characterization of the Epoxy Resin Compositions Exp. 1-3

The epoxy resin compositions obtained in Example 1-3 were characterized based on the following properties.

**Performance Properties:** Test panels for determination of various performance properties of epoxy resin composition were prepared by Vacuum Casting (VC) process for Exp.1 and 3 and by Automatic pressure gelation (APG) process for Exp. 2 in preheated molds. The panels for VC were cured at 80°C for 6 hours, and then post cured at 140°C for 10 hours, whereas the panels for APG were cured at 140°C/10 hours. The specimens were extracted from cured panels by CNC machine.

**Mechanical properties:** Tensile and flexural properties were determined by Instron UTM 5569, 50KN. The thermal aging behavior was determined by thermal aging test of cured specimen in oven by conditioning @ 180°C for 1000 hrs.

**Electrical properties:** Insulating properties such as dielectric strength, were determined by dielectric rigidity instrument.

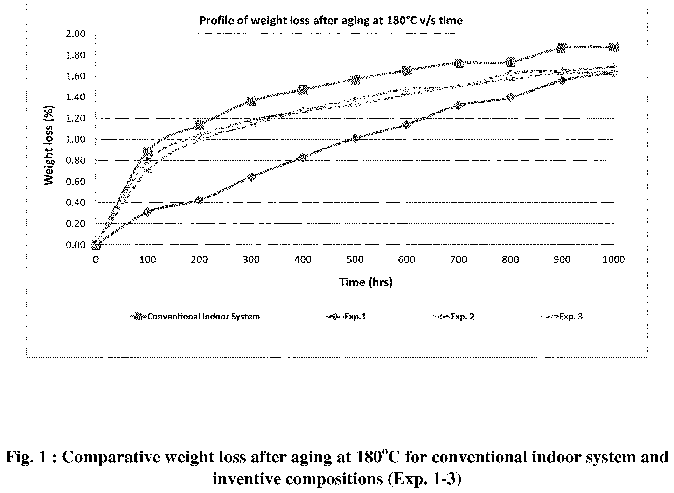

**Table 2** demonstrates the superior properties of the inventive compositions (Exp 1, Exp 2, and Exp 3) compared to conventional indoor system. The superior properties of the inventive compositions is also illustrated in FIG. 1 where it is clear that the conventional composition shows higher weight loss after aging at 180°C for 1000 hours. Further the inventive compositions exhibit higher Critical Strain Energy Release Rate (> 900 J/m²) compared to the conventional composition.

**Table 2: Properties of the Epoxy Resin Compositions**

| **Property** | **Conventional Indoor System** | **Exp 1** | **Exp 2** | **Exp 3** |
|---|---|---|---|---|
| Mixed viscosity @80°C (mPa.s) | 7,056 | 4,710 | 2,078 | 5,706 |
| Gel time @ 120°C (minutes) | 10:30 | 10:10 | 19:21 | 15:50 |
| Glass transition temperature (Tg)(2) (°C) | 92.6 | 84.38 | 140.14 | 147.02 |
| Tensile strength (MPa) | 86.72 | 64.33 | 41.93 | 52.48 |
| Elongation at break (%) | 1.21 | 1.363 | 0.57 | 0.806 |
| E-Modulus (MPa) | 12,334 | 9,093 | 8,900 | 8,727 |
| Flexural strength (MPa) | 141.35 | 116.94 | 101.68 | 100.48 |
| Flexural strain (%) | 1.39 | 1.764 | 1.388 | 1.498 |
| E-modulus (MPa) | 12,690 | 10,120 | 9,657 | 8,181 |
| Dielectric strength (kV/mm) | 22.19 | 19.36 | 21.73 | 19.26 |
| Dissipation factor @1MHz (%) | 2-3 | 1.7 | 1.5 | 0.7 |
| Dielectric Constant @1MHz | 3.26 | 3.53 | 3.61 | 3.09 |
| Comparative Tracking Index (Volts) | > 600 | > 600 | > 600 | > 600 |
| Thermal Aging at 180°C (Wt.loss after 1000 hours) (%) | 1.88 | 1.63 | 1.69 | 1.64 |
| Water absorption @23°C, 3 day (%) | 0.045 | 0.0447 | 0.035 | 0.0852 |
| Water absorption | 0.0727 | 0.0762 | 0.0477 | 0.1288 |
| @23°C, 7 days (%) | | | | |
| Water absorption @23°C, 10 days (%) | 0.0859 | 0.0928 | 0.0592 | 0.158 |
| Critical stress intensity factor (K_{1C}) (SENB mode) (MPa.m1/2) | 2.74 | 3.09 | 3.50 | 3.11 |
| Critical Strain Energy Release Rate (G_{1C}) (SENB mode) (J/m2) | 716 | 1,029 | 1,478 | 1,153 |
| Thermal shock Resistance (140°C, 30 mins -40°C, 15 mins 25°C, 15 mins) | Crack | No Crack | No Crack | No Crack |

### Example 3: Preparation of the Inventive Epoxy Resin Compositions (Exp. 4-9)

**Exp. 4:** The anhydride curing agent, glutaric anhydride, at 65% by weight of epoxy resin, was heated at 60°C in a closed vessel under a nitrogen atmosphere to obtain the compound in a molten form. The Bisphenol A epoxy resin with equivalent weight, 186 gm/eq was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 1% by weight of epoxy resin and wetting agent at 3.05% by weight of epoxy resin, were added to the epoxy resin and curing agent mix and stirred under nitrogen at 50°C for 15 minutes. Finally, the filler, Silica W12EST, was added, at 305 % by weight of epoxy resin to the epoxy resin, the curing agent, the accelerator and the wetting agent mix and the mixture so obtained was stirred under 5 mbar vacuum for 15 minutes to formulate the epoxy resin composition.

**Exp. 5:** molten form. The Bisphenol A epoxy resin with equivalent weight, 186 gm/eq was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 1% by weight of epoxy resin and coupling agent at 3.05% by weight of epoxy resin, were added to the epoxy resin and curing agent mix and stirred under nitrogen at 50°C for 15 minutes. Finally, the filler, Silica W12EST, was added, at 305% by weight of epoxy resin to the epoxy resin, the curing agent, the accelerator and the coupling agent mix and the mixture so obtained was stirred under 5 mbar vacuum for 15 minutes to formulate the epoxy resin composition.

**Exp. 6:** The anhydride curing agent, glutaric anhydride, at 65% by weight of epoxy resin, was heated at 60°C in a closed vessel under a nitrogen atmosphere to obtain the compound in a molten form. The Bisphenol A epoxy resin with equivalent weight, 186 gm/eq was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 1% by weight of epoxy resin and wetting agent at 3.05% by weight of epoxy resin, were added to the epoxy resin and curing agent mix and stirred under nitrogen at 50°C for 15 minutes. Finally, the filler, Wollastonite TREMIN 283-010EST, was added, at 305% by weight of epoxy resin to the epoxy resin, the curing agent, the accelerator and the wetting agent mix and the mixture so obtained was stirred under 5 mbar vacuum for 15 minutes to formulate the epoxy resin composition.

**Exp. 7:** The anhydride curing agent, glutaric anhydride, at 65% by weight of epoxy resin, was heated at 60°C in a closed vessel under a nitrogen atmosphere to obtain the compound in a molten form. The Bisphenol A epoxy resin with equivalent weight, 186 gm/eq which was mixed with 14% of modifier at 80°C for 1 hour, was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 1% by weight of epoxy resin, was added to the epoxy resin and curing agent mix and stirred under nitrogen at 50°C for 15 minutes. Finally, the filler, Silica W12EST, was added, at 325% by weight of epoxy resin to the epoxy resin, the curing agent and the accelerator mix and the mixture so obtained was stirred under 5 mbar vacuum for 15 minutes to formulate the epoxy resin composition.

**Exp. 8:** The anhydride curing agent, glutaric anhydride, at 65% by weight of epoxy resin, was heated at 60°C in a closed vessel under a nitrogen atmosphere to obtain the compound in a molten form. The Bisphenol A epoxy resin with equivalent weight, 186 gm/eq was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 1% by weight of epoxy resin, was added to the epoxy resin and curing agent mix and stirred under nitrogen at 50°C for 15 minutes. Finally, the filler, Silica W12EST was added, at 305 % by weight of epoxy resin to the epoxy resin, the curing agent and the accelerator mix and the mixture so obtained was stirred under 5 mbar vacuum for 15 minutes to formulate the epoxy resin composition.

**Exp. 9:** The anhydride curing agent, glutaric anhydride, at 65% by weight of epoxy resin, was heated at 60°C in a closed vessel under a nitrogen atmosphere to obtain the compound in a molten form. The Bisphenol A epoxy resin with equivalent weight, 186 gm/eq was charged in a separate vessel and warmed to 50°C. The molten glutaric anhydride, 60% by weight of epoxy resin, was added to the vessel containing the epoxy resin and both components were stirred under nitrogen at 50°C for 15 minutes. Benzyl di-methyl amine at 2% by weight of epoxy resin, was added to the epoxy resin and curing agent mix and stirred under nitrogen at 50°C for 15 minutes. Finally, the filler, Silica W12EST was added, at 305% by weight of epoxy resin to the epoxy resin, the curing agent and the accelerator mix and the mixture so obtained was stirred under 5 mbar vacuum for 15 minutes to formulate the epoxy resin composition. **Table 3** provides the details of the inventive compositions **Exp 4-9.**

**Table 3**

| **Component/ Application** | **Exp. 4** | **Exp. 5** | **Exp. 6** | **Exp. 7** | **Exp. 8** | **Exp. 9** |
|---|---|---|---|---|---|---|
| Epoxy Resin | Bisphenol A epoxy resin | Bisphenol A epoxy resin | Bisphenol A epoxy resin | Bisphenol A epoxy resin | Bisphenol A epoxy resin | Bisphenol A epoxy resin |
| Hardener | Glutaric anhydride | Glutaric anhydride | Glutaric anhydride | Glutaric anhydride | Glutaric anhydride | Glutaric anhydride |
| Accelerator | Benzyl di-methyl amine | Benzyl di-methyl amine | Benzyl di-methyl amine | Benzyl di-methyl amine | Benzyl di-methyl amine | Benzyl di-methyl amine |
| Filler | Silica | Silica | Wollastonit e | Silica | Silica | Silica |
| Ratio Resin: Hardener: Accelerator : Filler | 100:60:1:305 | 100:60:1:305 | 100:60:1:30 5 | 100:60:1:32 5 | 100:60:1: 305 | 100:60:2: 305 |
| Modifier (part by wt. of Epoxy resin) | - | - | - | Toughener (14) | - | - |
| Additive (part by wt. of Epoxy resin) | Wetting agent (3.05) | Coupling agent (3.05) | Wetting agent (3.05) | - | - | - |
| Application | Indoor | Indoor | Indoor | Indoor | Indoor | Indoor |

### Example 4: Characterization of the Inventive Epoxy Resin Compositions Exp 4-9

The epoxy resin compositions obtained in Exp. 4-9 were characterized based on the following properties.

**Performance Properties:** Test panels for determination of various performance properties of epoxy resin composition were prepared by VC process for Exp.4-7 and 9 and by APG process for Exp. 8 in preheated molds. The panels for VC were cured at 80°C for 6 hours, and then post cured at 140°C for 10 hours. Whereas the panels for APG were cured at 140°C /10 hours. The specimens were extracted from cured panels by CNC machine.

**Mechanical properties:** Tensile and flexural properties were determined by Instron UTM 5569, 50KN. The thermal aging behavior was determined by thermal aging test of cured specimen in oven by conditioning @ 180°C for 1000 hrs.

**Electrical properties:** Insulating properties such as dielectric strength, were determined by dielectric rigidity instrument.

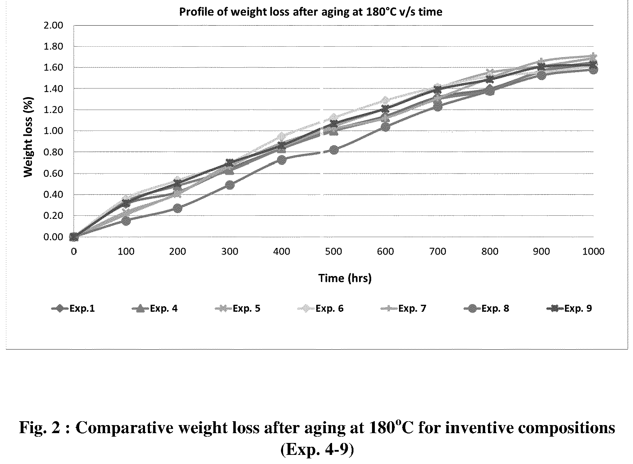

**Table 4** demonstrates the properties of the inventive compositions (Exp. 1, 4-9). The properties are also illustrated in FIG. 2 where it is clear that the inventive compositions has weight loss < 1.8% after aging at 180°C for 1000 hours. Further the inventive compositions exhibits higher Critical Strain Energy Release Rate (> 900 J/m²).

**Table 4: Properties of the Epoxy Resin Compositions**

| **Property** | **Exp. 1** | **Exp. 4** | **Exp. 5** | **Exp. 6** | **Exp. 7** | **Exp. 8** | **Exp. 9** |
|---|---|---|---|---|---|---|---|
| Mixed viscosity @80°C (mPa.s) | 4,710 | 3,050 | 4,587 | 7,819 | 6,289 | 4,678 | 4,730 |
| Gel time @ 120°C (minutes) | 10:10 | 12:28 | 8:50 | 11:21 | 11:56 | 10:56 | 6:52 |
| Glass transition temperature (Tg)(2) (°C) | 84.38 | 78.3 | 73.9 | 79.91 | 71.45 | 83.65 | 80.85 |
| Tensile strength (MPa) | 64.33 | 66.23 | 68.54 | 75.49 | 78.64 | 69.41 | 67.23 |
| Elongation at break (%) | 1.363 | 1.456 | 1.512 | 1.198 | 1.605 | 1.371 | 1.317 |
| E-Modulus (MPa) | 9,093 | 9,357 | 9,876 | 12,225 | 10,451 | 9,896 | 9,158 |
| Flexural strength (MPa) | 116.94 | 127.19 | 127.81 | 129.67 | 135.78 | 124.02 | 116.98 |
| Flexural strain (%) | 1.764 | 1.87 | 1.997 | 1.659 | 1.564 | 1.817 | 1.697 |
| E-modulus (MPa) | 10,120 | 9,921 | 9,821 | 12273 | 13,468 | 10,238 | 9,863 |
| Dielectric strength (kV/mm) | 19.36 | 20.8 | 20.84 | 18.01 | 18.23 | 22.19 | 19.93 |
| Dissipation factor @ 1MHz (%) | 1.7 | 1.6 | 1.7 | 1.6 | 1.7 | 1.7 | 1.6 |
| Dielectric Constant @1MHz | 3.53 | 3.37 | 3.39 | 4.06 | 4.10 | 3.51 | 3.50 |
| Comparative Tracking Index (Volts) | > 600 | > 600 | > 600 | > 600 | > 600 | > 600 | > 600 |
| Thermal Aging at 180°C (Wt.loss after 1000 hours) (%) | 1.63 | 1.65 | 1.69 | 1.61 | 1.71 | 1.58 | 1.62 |
| Critical stress intensity factor (K_{1C}) (SENB mode) (MPa.m^{1/2}) | 3.09 | 3.08 | 2.93 | 3.25 | 3.42 | 2.98 | 2.90 |
| Critical Strain Energy Release Rate (G_{1C}) (SENB mode) (J/m²) | 1029 | 1109 | 1051 | 1529 | 1896 | 935 | 959 |
| Thermal shock Resistance (140°C, 30 mins -40°C, 15 mins 25°C, 15 mins) | No Crack | No Crack | No Crack | No Crack | No Crack | No Crack | No Crack |

### Example 5: Preparation of the Inventive Composition Exp 10

**Exp. 10:** The anhydride curing agent, glutaric anhydride, at 75% by weight of epoxy resin, was heated at 60°C in a closed vessel under a nitrogen atmosphere to obtain the compound in a molten form. The Cycloaliphatic epoxy resin with equivalent weight, 131 gm/eq was charged in a separate vessel and warmed to 50°C. The molten glutaric anhydride, 72% by weight of epoxy resin, was added to the vessel containing the epoxy resin and both components were stirred under nitrogen at 50°C for 15 minutes. Benzyl di-methyl amine at 1% by weight of epoxy resin, was added to the epoxy resin and curing agent mix and stirred under nitrogen at 50°C for 15 minutes. Finally, the filler, Silica W12EST, was added, at 320 % by weight of epoxy resin to the epoxy resin, the curing agent and the accelerator mix and the mixture so obtained was stirred under 5 mbar vacuum for 15 minutes to formulate the epoxy resin composition.

**Table 5** provides the details of the compositions of Conventional Outdoor system and Exp 10.

**Table 5: Details of the Compositions**

| **Component/ Application** | **Conventional Outdoor System** | **Exp 10** |
|---|---|---|
| Epoxy Resin | Cycloaliphatic epoxy resin | Cycloaliphatic epoxy resin |
| Hardener | Modified anhydride | Glutaric anhydride |
| Accelerator | Benzyl di-methyl amine | Benzyl di-methyl amine |
| Filler | Silica | Silica |
| Ratio Resin: Hardener: Accelerator: Filler | 100:90: 1:290 | 100:72:1:320 |
| Application | Outdoor | Outdoor |

### Example 6: Characterization of Inventive Composition Exp 10 with Conventional Outdoor application

The epoxy resin compositions obtained in Exp. 10 was characterized based on the following properties.

**Performance Properties:** Test panels for determination of various performance properties of epoxy resin composition was prepared by Automatic pressure gelation (APG) process for Exp. 10 in preheated molds. The panels for APG were cured at 140°C/10 hours. The specimens were extracted from cured panels by CNC machine.

**Mechanical properties:** Tensile and flexural properties were determined by Instron UTM 5569, 50KN. The thermal aging behavior was determined by thermal aging test of cured specimen in oven by conditioning @ 180°C for 1000 hrs.

**Electrical properties:** Insulating properties such as dielectric strength, were determined by dielectric rigidity instrument.

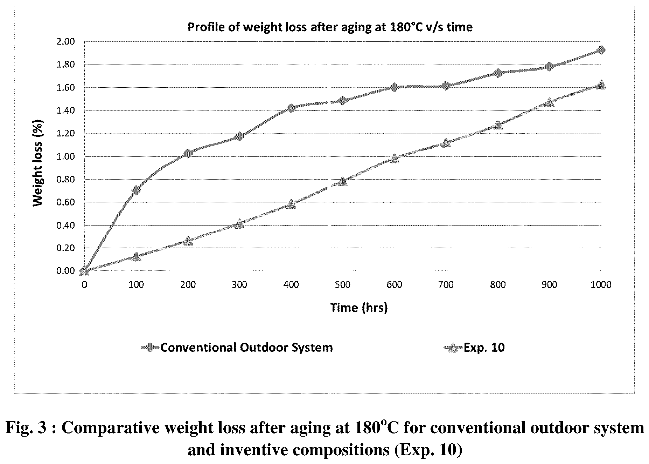

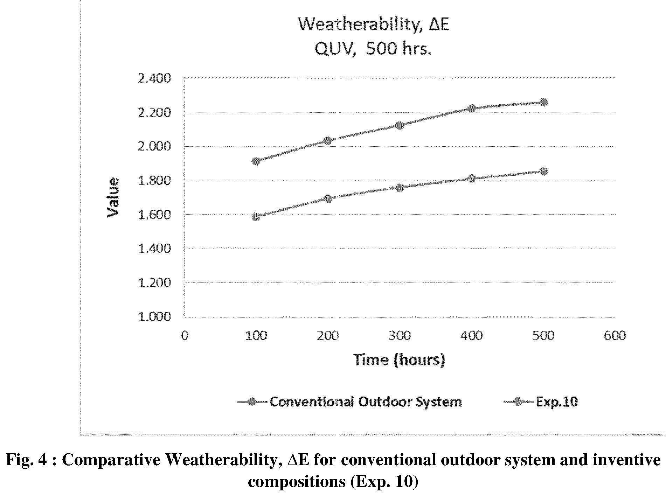

**Table 6** demonstrates the superior properties of the inventive composition Exp 10 compared with the conventional composition. As seen in Table 6 below, the inventive composition demonstrates superior properties. This is also illustrated in FIG. 3 where it is clear that the conventional composition shows higher weight loss after aging at 180°C for 1000 hours. In addition in FIG. 4, the inventive composition Exp 10 shows better weatherability resistance after QUV, 500 hrs compared with the conventional outdoor system.

**Table 6: Comparison of the Properties**

| **Property** | **Conventional Outdoor System** | **Exp. 10** |
|---|---|---|
| Mixed viscosity @80°C (mPa.s) | 5,038 | 5,657 |
| Gel time @ 120°C (minutes) | 7:10 | 10:38 |
| Glass transition temperature (Tg)(2) (°C) | 107.04 | 138.45 |
| Tensile strength (MPa) | 80.58 | 79.58 |
| Elongation at break (%) | 1.021 | 1.192 |
| E-Modulus (MPa) | 10,920 | 10,421 |
| Flexural strength (MPa) | 136.9 | 131.15 |
| Flexural strain (%) | 1.512 | 1.784 |
| E-modulus (MPa) | 10,237 | 8,950 |
| Dielectric strength (kV/mm) | 20.18 | 19.7 |
| Dissipation factor @ 1MHz (%) | 0.9 | 1.1 |
| Dielectric Constant @ 1MHz | 3.28 | 3.55 |
| Comparative Tracking Index (Volts) | > 600 | > 600 |
| Thermal Aging at 180°C (Wt. loss after 1000 hours) (%) | 1.93 | 1.63 |
| Weatherability, ΔE at 500 hrs. (QUV) | 2.26 | 1.85 |
| Critical stress intensity factor (K_{1C}) (SENB mode) (MPa.m^{1/2}) | 1.99 | 2.16 |
| Critical Strain Energy Release Rate (G_{1C}) (SENB mode) (J/m²) | 698 | 1087 |

### INDUSTRIAL APPLICATION

The present disclosure provides epoxy resin composition suitable for use in the manufacturing of products such as electrical and insulating components for power generation, transmission and distribution. It may also be used in other applications such as fiber reinforce composites in infrastructure and energy applications.

The disclosed compositions include safe labelled, REACH and SVHC compliant anhydrides which do not have the possibility of inclusion in the SVHC list in the future.

The invention further addresses health and safety concerns associated with commonly used anhydrides and can be used for manufacturing both indoor and outdoor electrical components. The invention further provides superior thermal aging behavior compared to conventional epoxy-anhydride systems.

## Claims

1. A method for preparing an epoxy resin composition, the method comprising:
a) mixing an epoxy resin selected from the group consisting of bisphenol A epoxy resin, bisphenol F epoxy resin, novolac based resin, cycloaliphatic epoxy resin, and a combination thereof in the range of 35-65% w/w, and an anhydride curing agent selected from the group consisting of glutaric anhydride, dodecenyl succinic anhydride, nonenyl succinic anhydride, and a combination thereof, in the range of 35-65% w/w while continuously stirring at a temperature in the range of 15-100°C for 15-120 minutes;
b) adding to the mixture, one or more accelerator selected from the group consisting of amine, a metal halide, a phosphine, an acetylacetonate, an imidazole compound and a combination thereof, in the range of 0.3-1.5% by weight of the mixture and one or more filler selected from the group consisting of silica, wollastonite and a combination thereof, in the range of 190-230 % by weight of the mixture; and
c) curing the mixture obtained after step (b) at 80°C-140°C for 10 minutes to 10 hours to obtain the epoxy resin composition,
wherein the weight loss of the composition is less than 1.8% after aging for 1000 hrs at 180°C based on IEC 60216.

2. The method as claimed in any of the preceding claims, further comprising adding one or more modifier in the range of 5-15% by weight of the mixture to the mixture of the epoxy resin and the anhydride curing agent.

3. The method as claimed in claim 4, wherein the one or more modifier is selected from the group consisting of plasticizer, flexiblizer, toughener, and a combination thereof.

4. The method as claimed in any of the preceding claims, further comprising adding one or more additives in the range of 0.5-3% w/w by weight of the mixture to the mixture of the epoxy resin and the anhydride curing agent.

5. The method as claimed in claim 4, wherein the one or more additive is selected from the group consisting of defoamer, flow additive, rheological additive, air release additive, wetting and dispersion agent, pigment, coupling agent, and a combination thereof.

6. The method as claimed in any of preceding claims, wherein the epoxy resin composition has a Critical Strain energy release rate in the range of 900-1500 J/m2.

7. An epoxy resin composition comprising:
a) an epoxy resin selected from the group consisting of bisphenol A epoxy resin, bisphenol F epoxy resin, novolac based resin, cycloaliphatic epoxy resin, and a combination thereof in the range of 35-65% w/w;
b) an anhydride curing agent selected from the group consisting of glutaric anhydride, dodecenyl succinic anhydride, nonenyl succinic anhydride, and a combination thereof, in the range of 35-65% w/w;
c) one or more accelerator selected from the group consisting of amine, a metal halide, a phosphine, an acetylacetonate, an imidazole compound and a combination thereof, in the range of 0.3-1.5 % by weight of the epoxy resin and the anhydride curing agent; and
d) one or more filler selected from the group consisting of silica, wollastonite and a combination thereof, in the range of 190-230% by weight of the epoxy resin and the anhydride curing agent;
wherein weight loss of the composition is less than 1.8% after aging 1000 hrs at 180°C based on IEC 60216.

8. The composition as claimed in claim 7, wherein the composition has a Critical Strain energy release rate in the range of 900-1500 J/m2.

9. A product made from the composition as claimed in any of claims 7 or 8.

10. The product as claimed in claim 9, wherein the product is an electrical insulating component, an instrument transformer, a power transformer, a bushing, an insulator, or a switchgear.

## Patentansprüche

1. Verfahren zur Herstellung einer Epoxidharzzusammensetzung, wobei das Verfahren Folgendes umfasst:
a) Mischen eines Epoxidharzes, ausgewählt aus der Gruppe, bestehend aus Bisphenol-A-Epoxidharz, Bisphenol-F-Epoxidharz, Novolak-basiertem Harz, cycloaliphatischem Epoxidharz und einer Kombination davon im Bereich von 35-65 Gew.%, und eines Anhydrid-Härtemittels, ausgewählt aus der Gruppe, bestehend aus Glutarsäureanhydrid, Dodecenylbernsteinsäureanhydrid, Nonenylbernsteinsäureanhydrid und einer Kombination davon im Bereich von 35-65 Gew.% unter kontinuierlichem Rühren bei einer Temperatur im Bereich von 15-100 °C während 15-120 Minuten;
b) Zugeben zur Mischung eines oder mehrerer Beschleuniger, ausgewählt aus der Gruppe, bestehend aus Amin, einem Metallhalogenid, einem Phosphin, einem Acetylacetonat, einer Imidazolverbindung und einer Kombination davon im Bereich von 0,3-1,5 Gew.% der Mischung und eines oder mehrerer Füllstoffe, ausgewählt aus der Gruppe, bestehend aus Siliciumdioxid, Wollastonit und einer Kombination davon im Bereich von 190-230 Gew.% der Mischung; und
c) Aushärten der Mischung, die nach Schritt (b) bei 80 °C - 140 °C während 10 Minuten bis 10 Stunden erhalten wurde, um die Epoxidharzzusammensetzung zu erhalten,
wobei der Gewichtsverlust der Zusammensetzung nach 1000 Stunden Alterung bei 180 °C basierend auf IEC 60216 weniger als 1,8 % beträgt.

2. Verfahren nach einem der vorhergehenden Ansprüche, weiter umfassend Zugeben eines oder mehrerer Modifikatoren im Bereich von 5-15 Gew.% der Mischung zur Mischung aus dem Epoxidharz und dem Anhydrid-Härtemittel.

3. Verfahren nach Anspruch 4, wobei der eine oder die mehreren Modifikatoren ausgewählt sind aus der Gruppe, bestehend aus Weichmacher, Flexibilisierungsmittel, Zähigkeitsverbesserer und einer Kombination davon.

4. Verfahren nach einem der vorhergehenden Ansprüche, weiter umfassend Zugeben eines oder mehrerer Additive im Bereich von 0,5-3 Gew.% der Mischung zur Mischung aus dem Epoxidharz und dem Anhydrid-Härtemittel.

5. Verfahren nach Anspruch 4, wobei das eine oder die mehreren Additive ausgewählt sind aus der Gruppe, bestehend aus Entschäumer, Fließmittel, rheologischem Additiv, Entlüftungsadditiv, Benetzungs- und Dispergiermittel, Pigment, Haftvermittler und einer Kombination davon.

6. Verfahren nach einem der vorhergehenden Ansprüche, wobei die Epoxidharzzusammensetzung eine kritische Dehnungsenergiefreisetzungsrate im Bereich von 900-1500 J/m² aufweist.

7. Epoxidharzzusammensetzung, umfassend:
a) ein Epoxidharz, ausgewählt aus der Gruppe, bestehend aus Bisphenol-A-Epoxidharz, Bisphenol-F-Epoxidharz, Novolak-basiertem Harz, cycloaliphatischem Epoxidharz und einer Kombination davon im Bereich von 35-65 Gew.%;
b) ein Anhydrid-Härtemittel, ausgewählt aus der Gruppe, bestehend aus Glutarsäureanhydrid, Dodecenylbernsteinsäureanhydrid, Nonenylbernsteinsäureanhydrid und einer Kombination davon im Bereich von 35-65 Gew.%;
c) einen oder mehrere Beschleuniger, ausgewählt aus der Gruppe, bestehend aus Amin, einem Metallhalogenid, einem Phosphin, einem Acetylacetonat, einer Imidazolverbindung und einer Kombination davon im Bereich von 0,3-1,5 Gew.% des Epoxidharzes und des Anhydrid-Härtemittels; und
d) ein oder mehrerer Füllstoffe, ausgewählt aus der Gruppe, bestehend aus Siliciumdioxid, Wollastonit und einer Kombination davon im Bereich von 190-230 Gew.% des Epoxidharzes und des Anhydrid-Härtemittels;
wobei der Gewichtsverlust der Zusammensetzung nach 1000 Stunden Alterung bei 180 °C basierend auf IEC 60216 weniger als 1,8 % beträgt.

8. Zusammensetzung nach Anspruch 7, wobei die Zusammensetzung eine kritische Dehnungsenergiefreisetzungsrate im Bereich von 900-1500 J/m² aufweist.

9. Produkt, hergestellt aus der Zusammensetzung nach einem der Ansprüche 7 oder 8.

10. Produkt nach Anspruch 9, wobei das Produkt eine elektrische Isolierkomponente, ein Messwandler, ein Leistungstransformator, eine Buchse, ein Isolator oder eine Schaltanlage ist.

## Revendications

1. Procédé de préparation d'une composition de résine époxy, le procédé comprenant :
a) le mélange d'une résine époxy choisie dans le groupe constitué par une résine époxy de bisphénol A, une résine époxy de bisphénol F, une résine à base de novolac, une résine époxy cycloaliphatique et une combinaison de celles-ci comprise dans la plage de 35 à 65 % p/p, et d'un agent de durcissement anhydride choisi dans le groupe constitué par l'anhydride glutarique, l'anhydride dodécénylsuccinique, l'anhydride nonénylsuccinique ou une combinaison de ceux-ci compris dans la plage de 35 à 65 % p/p, sous agitation continue à une température comprise dans la plage de 15 à 100 °C pendant 15 à 120 minutes ;
b) l'ajout au mélange d'un ou plusieurs accélérateurs choisis dans le groupe constitué par une amine, un halogénure métallique, une phosphine, un acétylacétonate, un composé imidazole et une combinaison de ceux-ci, compris dans la plage de 0,3 à 1,5 % en poids du mélange et d'une ou plusieurs charges choisies dans le groupe constitué par la silice, la wollastonite et une combinaison de celles-ci, comprises dans la plage de 190 à 230 % en poids du mélange ; et
c) le durcissement du mélange obtenu après l'étape (b) à 80 °C - 140 °C pendant 10 minutes à 10 heures afin d'obtenir la composition de résine époxy,
dans lequel la perte de masse de la composition est inférieure à 1,8 % après un vieillissement de 1000 heures à 180 °C, sur la base de la norme IEC 60216.

2. Procédé selon l'une quelconque des revendications précédentes, comprenant en outre l'ajout d'un ou plusieurs modificateurs compris dans la plage de 5 à 15 % en poids du mélange, au mélange de la résine époxy et de l'agent de durcissement anhydride.

3. Procédé selon la revendication 4, dans lequel le ou les modificateurs sont choisis dans le groupe constitué par un plastifiant, un agent flexibilisant, un agent de renforcement et une combinaison de ceux-ci.

4. Procédé selon l'une quelconque des revendications précédentes, comprenant en outre l'ajout d'un ou plusieurs additifs compris dans une plage de 0,5 à 3 % p/p du mélange, au mélange de la résine époxy et de l'agent de durcissement anhydride.

5. Procédé selon la revendication 4, dans lequel le ou les additifs sont choisis dans le groupe constitué par un antimousse, un additif de fluidité, un additif rhéologique, un additif de libération d'air, un agent de mouillage et de dispersion, un pigment, un agent de couplage, et une combinaison de ceux-ci.

6. Procédé selon l'une quelconque des revendications précédentes, dans laquelle la composition de résine époxy a un taux critique de libération d'énergie de déformation compris dans la plage de 900 à 1500 J/m².

7. Composition de résine époxy comprenant :
a) une résine époxy choisie dans le groupe constitué par une résine époxy de bisphénol A, une résine époxy de bisphénol F, une résine à base de novolac, une résine époxy cycloaliphatique et une combinaison de celles-ci, comprise dans la plage de 35 à 65 % p/p ;
b) un agent de durcissement anhydride choisi dans le groupe constitué par l'anhydride glutarique, l'anhydride dodécénylsuccinique, l'anhydride nonénylsuccinique ou une combinaison de ceux-ci, compris dans la plage de 35 à 65 % p/p ;
c) un ou plusieurs accélérateurs choisis dans le groupe constitué par une amine, un halogénure métallique, une phosphine, un acétylacétonate, un composé imidazole et une combinaison de ceux-ci, compris dans la plage de 0,3 à 1,5 % en poids de la résine époxy et de l'agent de durcissement anhydride ; et
d) une ou plusieurs charges choisies dans le groupe constitué par la silice, la wollastonite et une combinaison de celles-ci, comprises dans la plage de 190 à 230 % en poids de la résine époxy et de l'agent de durcissement anhydride ;
dans laquelle la perte de masse de la composition est inférieure à 1,8 % après un vieillissement de 1000 heures à 180 °C, sur la base de la norme IEC 60216.

8. Composition selon la revendication 7, dans laquelle la composition a un taux critique de libération d'énergie de déformation compris dans la plage de 900 à 1500 J/m².

9. Produit préparé à partir de la composition selon l'une quelconque des revendications 7 ou 8.

10. Produit selon la revendication 9, dans lequel le produit est un composant isolant électrique, un transformateur de mesure, un transformateur de puissance, un isolateur traversant, un isolateur ou un appareillage de commutation.
